# DEMANDE DE BREVET EUROPEEN

(11) **EP 1 916 381 A1**
(43) Date de publication de la demande: **30.04.2008**
(21) Numéro de dépôt: 07356110.2
(22) Date de dépôt: 03.08.2007
(51) Int. Cl.: E21D 20/02

(54) **Dispositif expéditeur de cartouches de résine pour appareil de boulonnage**

(30) Priorité: 19.10.2006 FR 0609182
(71) Demandeur: Sandvik Mining and Construction Lyon SAS, 69330 Meyzieu (FR)
(72) Inventeur: Brongniart, Frederic, 69400 Liergues (FR); Combe, Christel, 69008 Lyon (FR)
(74) Mandataire: Bratel, Gérard

(57) **Abrégé**

Le dispositif stocke un certain nombre de cartouches de scellement (8), prévues pour être introduites dans des trous forés. Il comprend au moins un bac de réception (5,6), contenant des cartouches (8) disposées chacune horizontalement les unes au dessus des autres, et surmontant une zone de chargement (28) en communication avec une zone d'expédition (29) des cartouches (8). Entre chaque bac récepteur (5,6) et la zone de chargement (28) est prévu un distributeur rotatif (15), activé de façon contrôlée pour extraire les cartouches du bac une à une. Ce dispositif s'applique aux domaines des mines et carrières, ainsi que des travaux publics.

## Description

La présente invention concerne un dispositif expéditeur de cartouches de résine, ou de cartouches de ciment, sans exclure ici d'autres matières de scellement, pour appareil de boulonnage utilisé dans le domaine des mines et des carrières, ou encore dans le domaine des travaux publics et notamment le creusement des tunnels.

Une technique de soutènement actuellement courante consiste, après avoir foré un trou par exemple dans le "toit" d'une galerie de mine, à introduire dans le trou foré une ou plusieurs cartouches de résine, de forme allongée, puis à mettre en place dans ce trou un boulon d'ancrage, dont le scellement est réalisé par la résine des cartouches. Pour cette utilisation, on connaît des cartouches de résine à prise rapide, et des cartouches de résine à prise lente. En variante, il est aussi connu d'utiliser des cartouches en ciment, qui sont stockées sèches et sont humidifiées lors de leur utilisation.

La foration des trous destinés à recevoir les cartouches, puis les boulons d'ancrage, est habituellement réalisée à l'aide d'un appareil de boulonnage, équipé d'une tourelle pivotante qui porte un chariot de foration et un chariot de boulonnage - voir par exemple les brevets français FR 1 359 297 et FR 2 677 703. Un tel appareil de boulonnage peut être équipé d'un dispositif d'injection de cartouches de résine ; dans ce cas, après foration d'un trou, la tourelle est amenée par pivotement dans une position intermédiaire, pour laquelle le dispositif d'injection de cartouches de résine est positionné dans l'axe du trou foré. Une ou plusieurs cartouches de résine sont alors introduites dans le trou foré, puis une deuxième rotation de la tourelle amène le chariot de boulonnage dans l'axe du trou ayant reçu la ou les cartouches de résine.

Actuellement, dans un tel cycle de fonctionnement, l'introduction de la cartouche ou des cartouches de résine dans le trou préalablement foré est réalisée le plus souvent au moyen d'un dispositif d'injection pneumatique, du genre "pistolet", tel que décrit par exemple dans le brevet français FR 2 386 682 (ou son équivalent le brevet US 4215953). Un tel dispositif ne permet pas d'automatiser l'introduction des cartouches, et il reste essentiellement un dispositif manuel. En particulier, l'opérateur doit introduire une à une les cartouches dans le dispositif, qui est dépourvu de tout système intégré de stockage des cartouches, celles-ci devant être mises en attente à proximité de l'opérateur. Ainsi, l'utilisation d'un tel dispositif d'injection de cartouches reste fastidieuse, et elle comporte des risques de mauvais comptage des cartouches introduites dans un trou, ou de cycle (manuel) non adapté, avec pour conséquence un risque de maintien incorrect du boulon d'ancrage, d'où une mise en danger des personnes.

On connaît aussi des dispositifs d'injection de cartouches de résine à barillet, qui permettent de stocker initialement un certain nombre de cartouches à introduire. Toutefois, ce genre de dispositif reste à cycle non programmable, le cycle de fonctionnement devant être installé manuellement, ici aussi avec un risque d'erreur sur le nombre de cartouches introduites. Le nombre total de cartouches pouvant être simultanément stockées sur le barillet reste limité, et le chargement de ces cartouches sur le barillet est fastidieux, puisque les cartouches doivent être insérées l'une après l'autre dans leurs logements respectifs sur le barillet. En général, un tel dispositif ne convient que pour des cartouches d'un diamètre défini, correspondant aux logements. Enfin, l'encombrement d'un dispositif à barillet reste important, rapporté au nombre de cartouches stockées, en raison du volume qui reste inutilisé au centre du barillet. Il est ici fait référence au document WO 99/36674.

La présente invention vise à éliminer les inconvénients, ci-dessus exposés, des dispositifs actuels et elle a donc pour but de fournir un dispositif de stockage et d'injection de cartouches de résine, adaptable sur un appareil de boutonnage, qui possède une capacité de stockage importante en nombre de cartouches, et qui s'adapte facilement à toutes dimensions de cartouches, tout en restant très compact, qui soit aussi d'une utilisation aisée notamment en ce qui concerne son chargement en cartouches, et qui puisse fonctionner suivant un cycle facilement automatisable, offrant toute sécurité.

A cet effet, l'invention a pour objet un dispositif expéditeur de cartouches pour appareil de boulonnage, du genre précisé en introduction, le dispositif étant apte à stocker un certain nombre de cartouches prévues pour être introduites dans des trous forés, ce dispositif étant essentiellement caractérisé par le fait qu'il comprend au moins un bac récepteur de cartouches, apte à contenir des cartouches disposées chacune horizontalement, les unes au-dessus des autres, chaque bac récepteur ayant une largeur sensiblement supérieure au diamètre d'une cartouche et, de préférence, égale à un multiple de ce diamètre, de sorte que les cartouches qu'il contient sont aussi décalées ou étalées dans le sens de sa largeur, le ou les bacs récepteurs surmontant une zone de chargement des cartouches qui communique avec une zone d'expédition des cartouches, et entre le ou chaque bac récepteur et la zone de chargement des cartouches étant prévus des moyens de distribution des cartouches, moyens qui sont activables de façon contrôlée.

Dans une forme de réalisation préférée, le dispositif expéditeur de cartouches objet de l'invention comprend deux bacs récepteurs de cartouches juxtaposés, en particulier un premier bac récepteur pour le stockage de cartouches dites "lentes", c'est-à-dire à prise lente, et un second bac récepteur pour le stockage de cartouches dites "rapides", c'est-à-dire des cartouches à prise rapide ; dans ce cas, des moyens de distribution des cartouches sont prévus à la base de chacun des deux bacs récepteurs, au-dessus d'une goulotte collectrice commune de profil en "V" faisant elle-même partie de la zone de chargement des cartouches. Deux types de cartouches peuvent ainsi être stockés séparément, sélectionnés et expédiés.

Avantageusement, le ou chaque bac récepteur de cartouches possède au moins une cloison transversale mobile, réglable en position dans la direction longitudinale de ce bac récepteur de manière à adapter celui-ci à la longueur des cartouches.

Le ou chaque bac récepteur de cartouches peut comporter, en particulier dans sa zone inférieure située juste au-dessus des moyens de distribution des cartouches, un détecteur de présence ou de niveau des cartouches dans ce bac récepteur. Les fonctions de distribution, de chargement et d'expédition des cartouches peuvent ainsi être désactivées, de façon automatique, si le bac récepteur utilisé est vide ou s'il ne contient plus qu'un nombre très faible de cartouches.

Le ou chaque bac récepteur de cartouches peut encore comporter, en particulier dans sa zone inférieure située juste au-dessus des moyens de distribution des cartouches, des moyens motorisés d'agitation de ces cartouches. Ces moyens motorisés d'agitation des cartouches sont avantageusement constitués par au moins un volet oscillant animé par une came rotative qui est accouplée, directement ou indirectement, à un moteur d'entraînement en rotation. Le volet oscillant assure un bon positionnement des cartouches, dans la zone inférieure du ou de chaque bac récepteur, en vue de leur prise en charge et de leur extraction par les moyens de distribution.

Dans une forme de réalisation de l'invention, les moyens de distribution des cartouches sont constitués, pour le ou chaque bac récepteur de cartouches, par un distributeur rotatif en forme générale de cylindre allongé d'axe sensiblement horizontal, pourvu à sa périphérie d'au moins un logement longitudinal apte à recevoir une cartouche et à la transférer du bac récepteur vers la zone de chargement, ledit cylindre étant accouplé, directement ou indirectement, à un moteur d'entraînement en rotation.

Avantageusement, pour le ou chaque bac récepteur de cartouches, dans la mesure où celui-ci est équipé d'un volet oscillant à fonction d'agitateur, la came rotative animant le volet oscillant d'une part, et le cylindre du distributeur rotatif d'autre part, sont accouplés à un moteur commun d'entraînement en rotation, notamment par l'intermédiaire d'une transmission à chaîne ou à courroie.

De préférence, il est associé au cylindre du ou de chaque distributeur rotatif un capteur pour le comptage du nombre de tours effectués par ce cylindre ou par son axe. Etant donné que le cylindre dépose à chaque tour complet une cartouche dans la zone de chargement, on dispose ainsi d'un moyen de contrôle du nombre de cartouches pouvant être sélectionnées pour être expédiées simultanément dans un même trou foré.

Selon un autre aspect de l'invention, la zone d'expédition se situe dans le prolongement direct de la zone de chargement, et il est prévu un vérin de poussée pour le déplacement en translation de chaque cartouche depuis la zone de chargement vers la zone d'expédition.

Une fois positionnée dans la zone d'expédition, chaque cartouche est expédiée, c'est-à-dire envoyée dans le trou préalablement foré, par soufflage d'air comprimé. Pour permettre cette opération, il est prévu un clapet monté, mobile entre une position d'ouverture et une position de fermeture, et situé entre la zone de chargement et la zone d'expédition, d'où chaque cartouche est expédiée par soufflage d'air comprimé : l'ouverture du clapet permet le transfert d'une cartouche depuis la zone de chargement vers la zone d'expédition, tandis que la fermeture de ce clapet permet, du côté de la zone d'expédition, l'action de l'air comprimé sur l'arrière de la cartouche pour son expédition. Cette fermeture du clapet peut être réalisée par la seule gravité.

Avantageusement, la zone d'expédition comporte un détecteur de présence de cartouche dans cette zone, pour n'autoriser le processus d'expédition par soufflage d'air que dans le cas de la présence effective d'au moins une cartouche, parvenue dans cette zone d'expédition. Ce détecteur peut être associé au clapet, et détecter son ouverture lors du passage d'une cartouche.

Dans l'ensemble, l'invention fournit ainsi un dispositif expéditeur de cartouches, qui constitue un magasin de stockage compact pour un certain nombre de cartouches, et qui est équipé pour sélectionner les cartouches une à une, en les prélevant de ce magasin, avant de les expédier vers le trou foré destiné à les recevoir.

Ce dispositif a l'avantage de posséder une capacité de stockage importante, en nombre de cartouches rapporté à son volume et à son encombrement, tout en permettant un rechargement aisé du ou des bacs de réception, par le haut.

De plus, les moyens de distribution, ainsi que la conception des zones de chargement et d'expédition des cartouches, assurent une extraction fiable des cartouches depuis le ou les bacs récepteurs, la fiabilité étant encore augmentée par les divers moyens de détection prévus.

Le cycle de fonctionnement du dispositif peut être facilement automatisé, avec sélection du nombre de cartouches à expédier à chaque cycle, et mise à l'arrêt automatique dans le cas où le bac récepteur est vide, ou en cas de blocage d'une cartouche notamment au niveau des moyens de distribution ou de la zone de chargement. Ce cycle peut être programmé selon diverses options.

L'automatisation du fonctionnement du dispositif contribue aussi au confort de travail et à la sécurité de l'opérateur.

Par ailleurs, le dispositif de l'invention est aisément adaptable à divers types et dimensions de cartouches. En particulier, le ou les bacs peuvent, sans aucune transformation, recevoir des cartouches de différentes longueurs et aussi de différents diamètres.

L'invention sera mieux comprise à l'aide de la description qui suit, en référence au dessin schématique annexé, représentant, à titre d'exemple, une forme d'exécution de ce dispositif expéditeur de cartouches :
Figure 1 est une vue d'ensemble, en perspective, d'un dispositif expéditeur de cartouches conforme à la présente invention ;
Figure 2 est une autre vue d'ensemble, en perspective, de ce dispositif expéditeur de cartouches ;

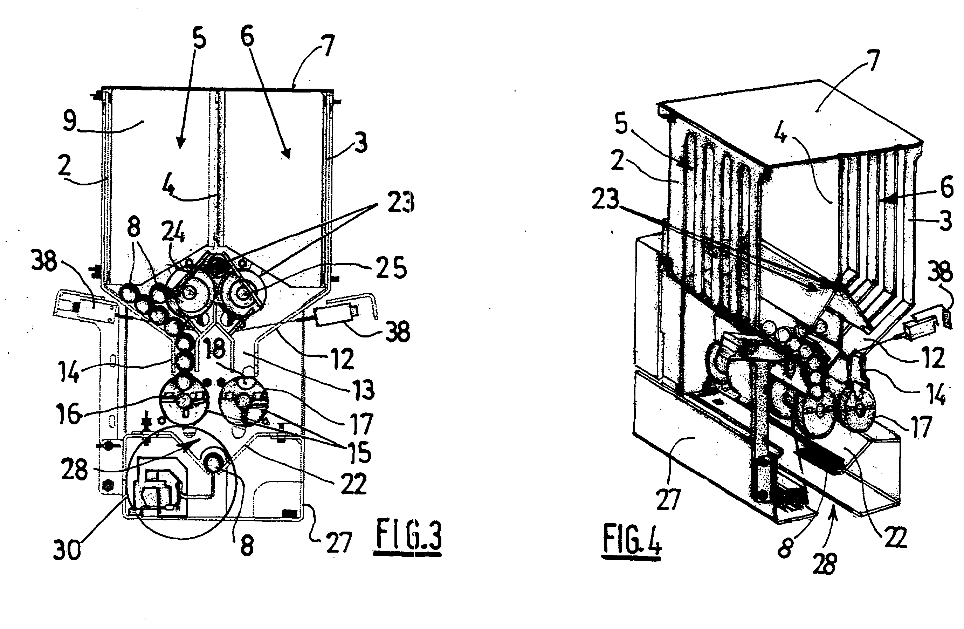

Figure 3 est une vue en coupe transversale du dispositif des figures 1 et 2, passant au travers des deux bacs récepteurs de ce dispositif ;
Figure 4 est une vue en perspective et en coupe, montrant certaines parties internes du dispositif expéditeur de cartouches ;
Figure 5 est une vue en coupe verticale montrant le détail de la zone d'expédition des cartouches ;
Figure 6 est une vue en perspective du boîtier délimitant cette zone d'expédition.

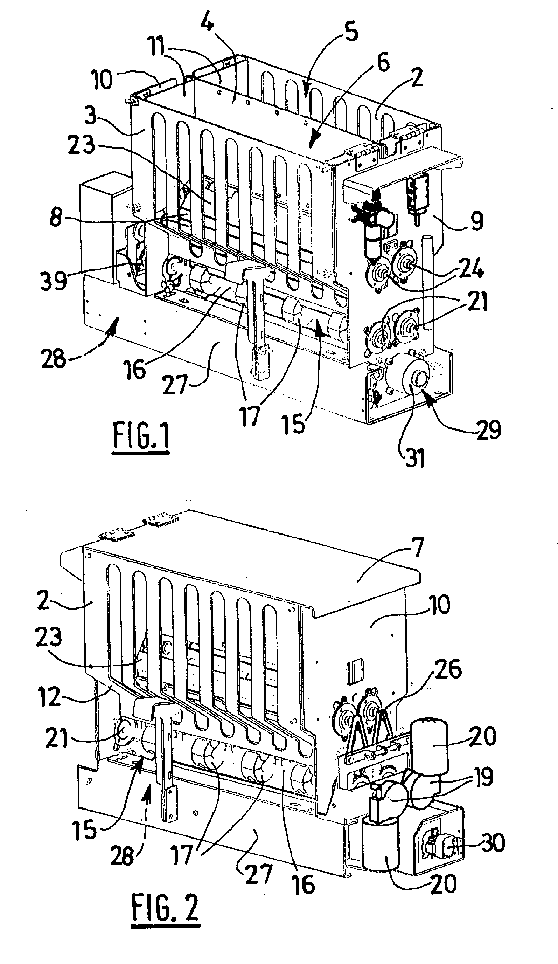

Le dispositif expéditeur de cartouches, représenté dans son ensemble sur les figures 1 et 2, possède une structure en tôle métallique avec, en particulier, deux parois verticales longitudinales opposées 2 et 3 et une cloison verticale intermédiaire 4, qui délimitent un premier bac récepteur 5 et un second bac récepteur 6, juxtaposés et recouverts par un couvercle pivotant commun 7. Les deux bacs 5 et 6 sont prévus l'un et l'autre pour recevoir des cartouches 8, notamment des cartouches de résine. Par exemple, le premier bac récepteur 5 est prévu pour le stockage de cartouches 8 "lentes", et le second bac récepteur 6 est prévu pour le stockage de cartouches 8 "rapides". L'ensemble des deux bacs récepteurs 5 et 6 est aussi délimité, à ses deux extrémités, par deux parois transversales opposées 9 et 10. Au moins une cloison transversale mobile 11, dont la position est réglable dans la direction longitudinale de chaque bac récepteur 5 ou 6, permet d'adapter chaque bac à la longueur des cartouches 8 qu'il est appelé à recevoir. On notera la largeur de chaque bac récepteur 5 ou 6 est sensiblement supérieure au diamètre d'une cartouche 8 et, de préférence, égale à un multiple de ce diamètre. Ainsi, les cartouches 8 sont non seulement empilées verticalement, mais aussi décalées ou étalées dans le sens de la largeur du bac récepteur 5 ou 6, ce qui permet de stocker un nombre élevé de cartouches 8 dans un volume compact, de hauteur limitée.

Dans leur partie inférieure, les deux bacs récepteurs 5 et 6 présentent un rétrécissement, réalisé à la manière d'une trémie par des parois inclinées 12, et se prolongeant vers le bas par une fente de sortie verticale 13 délimitée par des parois verticales rapprochées 14. Un distributeur rotatif 15 est placé au-dessous de chaque fente de sortie 13.

Chaque distributeur rotatif 15, de forme cylindrique allongée et d'axe horizontal 16, comporte une série de disques 17 calés sur cet axe 16, chaque disque 17 étant pourvu à sa périphérie d'un logement 18 en forme d'encoche, dont la position angulaire coïncide avec celle des logements similaires des autres disques 17.

Chaque axe horizontal 16 d'un distributeur rotatif 15 est accouplé à une extrémité, par l'intermédiaire d'un réducteur 19 par exemple à vis sans fin et roue tangente, à un moteur électrique d'entraînement 20. Les moyens d'entraînement sont ainsi situés, par exemple, du côté de la paroi terminale 10 des bacs récepteurs 5 et 6, tandis que du côté de l'autre paroi terminale 9 les deux axes horizontaux 16 sont simplement guidés dans des paliers 21.

Les deux distributeurs rotatifs 15, associés respectivement aux deux bacs récepteurs 5 et 6, sont disposés au-dessus d'une goulotte collectrice 22, de profil en "V", qui leur est commune.

A l'intérieur de chaque bac récepteur 5 ou 6, juste au-dessus du rétrécissement inférieur en forme de trémie, est disposé un volet agitateur 23, monté oscillant autour d'un axe horizontal 24 porté par la cloison verticale intermédiaire 4. Chaque volet oscillant 23 est animé par une came rotative 25, ayant par exemple la forme d'au moins un disque excentré monté tournant autour d'un axe horizontal. Une transmission à chaîne ou à courroie crantée 26 relie l'axe 16 de chaque distributeur rotatif 15 à l'axe de la came rotative 25 associée au même bac récepteur 5 ou 6, de sorte que le même moteur électrique d'entraînement 20 assure, simultanément, l'entraînement en rotation du distributeur rotatif 15 et l'entraînement en rotation de la came rotative 25, donc l'actionnement du volet oscillant 23.

La goulotte collectrice 22 appartient à une partie inférieure en forme de caisson 27 du dispositif, qui en constitue le support, la partie inférieure constituant aussi une zone de chargement 28 et une zone d'expédition 29 des cartouches 8 sélectionnées, extraites de l'un ou l'autre des deux bacs récepteurs 5 et 6. La zone d'expédition 29 est située dans le prolongement horizontal direct de la zone de chargement 28. Un vérin horizontal de poussée 30 est disposé de manière à pouvoir déplacer une cartouche 8 depuis la zone de chargement 28, c'est-à-dire depuis le fond de la goulotte collectrice 22, vers la zone d'expédition 29.

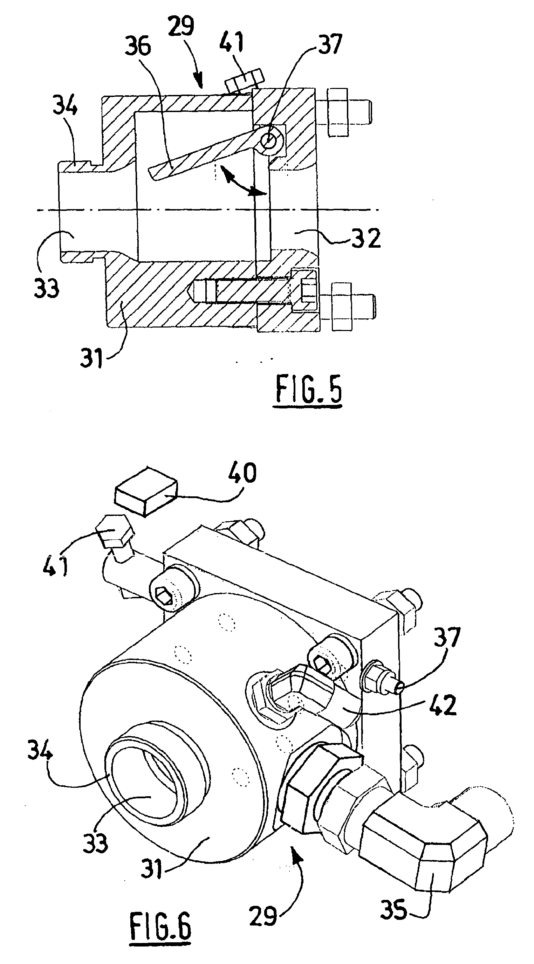

Comme le montrent plus particulièrement les figures 5 et 6, la zone d'expédition 29, située à la base du dispositif en avant de la paroi terminale 9 des bacs récepteurs 5 et 6, comporte un boîtier 31 qui délimite une chambre interne. Le boîtier 31 est pourvu, suivant son axe horizontal, d'une ouverture d'entrée 32 en communication directe avec la zone de chargement 29, et à l'opposé de l'entrée 32, d'une ouverture de sortie 33 entourée d'un raccord 34 apte à recevoir le départ d'un tuyau flexible (non représenté) prévu pour amener les cartouches 8 à distance, vers une glissière de boulonnage. Le boîtier 31 comporte aussi une arrivée latérale 35 d'air comprimé pour l'expédition des cartouches 8.

A l'intérieur du boîtier 31 est monté pivotant un clapet 36, articulé sur un axe 37. Le clapet 36 est ainsi rendu mobile entre une position d'ouverture (visible sur la figure 5) et une position de fermeture, dans laquelle il obture l'ouverture d'entrée 32 et assure alors une séparation étanche entre la zone de chargement 28 et la zone d'expédition 29.

Pour le contrôle du fonctionnement du dispositif expéditeur de cartouches, celui-ci comprend encore :
- dans la zone inférieure de chaque bac récepteur 5 ou 6, un détecteur 38 de présence de cartouches 8 ;
- au niveau de chaque distributeur rotatif 15, un capteur 39 qui assure le comptage du nombre de tours effectués par ce distributeur rotatif 15 ou par son axe 16 ;
- un autre détecteur 40 de présence de cartouches 8, situé dans la zone d'expédition 29.

Plus particulièrement, ce dernier détecteur 40 est réalisable comme un détecteur associé au clapet 36 et actionné par une vis 41 liée à l'axe 37, pour détecter l'ouverture du clapet 36 à chaque passage d'une cartouche 8.

Tous les détecteurs ou capteurs 38, 39 et 40 sont reliés à un coffret électronique de commande, non représenté, à partir duquel peuvent être programmés et commandés des cycles de fonctionnement entièrement automatiques ou partiellement manuels du dispositif. Sur ce coffret, un sélecteur permet en particulier de choisir un mode automatique ou un mode manuel, ou encore un mode "programmation" pour préparer le travail du dispositif. A partir du coffret sont notamment commandés les deux moteurs électriques 20 d'entraînement des deux distributeurs rotatifs 15, ainsi que le vérin de poussée 30 de la zone de chargement 28 et l'envoi d'air comprimé dans la zone d'expédition 29 par l'arrivée 35 correspondante.

En mode "programmation", l'opérateur programme le cycle automatique de fonctionnement, notamment en sélectionnant le type et le nombre de cartouches 8 à expédier à chaque cycle.

En mode automatique, en fonction de la programmation réalisée, se déroule une séquence comprenant le positionnement d'une première cartouche 8 dans la zone de chargement 28, la poussée de cette première cartouche 8 dans la zone d'expédition 29, puis le positionnement de la cartouche 8 suivante dans la zone de chargement 28 et sa poussée dans la zone d'expédition 29, et ainsi de suite, ce qui permet d'accumuler un certain nombre de cartouches 8 "lentes" et/ou "rapides" au départ du tuyau raccordé du boîtier 31, suivant la séquence programmée. Ensuite, en actionnant un bouton-poussoir spécifique, on commande l'expédition simultanée de toutes ces cartouches 8, par action de l'air comprimé.

En mode manuel, l'opérateur commande séparément et successivement, par action sur des boutons-poussoirs, le positionnement et le chargement de chaque cartouche 8, en sélectionnant à chaque fois une cartouche "lente" ou "rapide". Comme précédemment, il actionne ensuite un bouton-poussoir qui commande l'expédition de la ou des cartouches 8.

Dans tous les cas, à la base d'un bac récepteur 5 ou 6, la sélection d'une cartouche 8 s'effectue par une rotation d'un tour complet du distributeur rotatif 15 correspondant, rotation au cours de laquelle une cartouche 8 "tombe" dans le logement 18, décrit un demi-tour autour de l'axe horizontal 16 et est délivrée dans la partie supérieure de la goulotte collectrice 22, d'où elle roule jusqu'au fond de cette goulotte 22. Le mouvement oscillant simultané du volet agitateur 23 garantit le bon positionnement des cartouches 8 dans la zone inférieure du bac récepteur 5 ou 6, en vue de son prélèvement par le distributeur rotatif 15. Le profil en "V" de la goulotte réceptrice 22 amène toutes les cartouches 8 prélevées dans le même axe, que ces cartouches proviennent du premier bac récepteur 5 ou du second bac récepteur 6.

Chaque cartouche 8, ainsi parvenue au fond de la goulotte collectrice 22, est poussée par le vérin 30 jusque dans la zone d'expédition 29, en s'engageant dans le tuyau prolongeant cette zone. Lors de ce transfert, la cartouche 8 soulève le clapet 36 en le faisant pivoter autour de l'axe 37. Au moment de l'expédition, la fermeture du clapet 36 sous l'effet de la gravité empêche le reflux de l'air comprimé vers la zone de chargement 28, et garantit que toute la puissance de l'air comprimé injecté par l'arrivée latérale 35 s'exerce sur l'arrière des cartouches 8 pour leur propulsion le long du tuyau, jusqu'à la glissière de boulonnage. Eventuellement, une arrivée latérale d'eau 42 est utilisée pour humidifier les cartouches 8 au moment de leur expédition.

Pendant un cycle, grâce aux détecteurs 38 de présence de cartouches, il peut être constaté qu'un bac récepteur 5 ou 6 est vide ou presque vide et, s'il s'agit d'un bac dont les cartouches 8 sont présentement utilisées, le cycle est automatiquement arrêté. L'opérateur doit alors remettre des cartouches 8 dans le bac récepteur 5 ou 6 concerné, et relancer manuellement le cycle.

En cours de cycle, en cas de blocage d'une cartouche 8 par exemple au niveau d'un distributeur rotatif 15, un cycle supplémentaire peut être relancé automatiquement. En cas de blocage persistant, ce cycle s'arrête. L'opérateur doit alors débloquer la ou les cartouches 8 coincées, et relancer manuellement le cycle.

En plus de ces automatismes, et selon l'équipement du dispositif et de son coffret de commande, il est possible aussi à l'opérateur de diagnostiquer visuellement, par l'éclairement ou le clignotement de voyants, l'état de remplissage en cartouches 8 des bacs récepteurs 5 et 6, ou le blocage d'une cartouche 8.

On notera que la réalisation ajourée, par exemple sous forme de grille, des parois longitudinales 2 et 3 du dispositif permet aussi un contrôle visuel direct, sur ce dispositif, de l'état de remplissage en cartouches 8 des deux bacs récepteurs 5 et 6.

Le dispositif expéditeur de cartouches de résine, précédemment décrit, peut être embarqué sur un appareil de boulonnage, en une position adéquate pour le chargement des cartouches dans ses deux bacs récepteurs 5 et 6, et pour sa maintenance. Le dispositif expéditeur de cartouches sera ainsi placé à une distance plus ou moins grande de la glissière de boulonnage, à laquelle il est raccordé par le tuyau flexible précédemment évoqué.

Au sujet du positionnement de ce dispositif expéditeur de cartouches, on notera aussi que celui-ci sera, de préférence, placé à l'extérieur de la cabine de conduite de l'appareil de boulonnage, pour des raisons de sécurité (émanations gazeuses en cours de fonctionnement) et de propreté. Le fait que le dispositif puisse stocker un nombre élevé de cartouches, et expédier toutes ces cartouches sans intervention humaine directe sur le dispositif, autorise une telle localisation extérieure.

Il serait aussi envisageable de concevoir le dispositif expéditeur de cartouches, objet de l'invention, comme un dispositif entièrement autonome, notamment comme un dispositif mobile monté sur des roulettes, ce qui lui permettrait de desservir deux ou plusieurs appareils de boulonnage, ou de compléter des appareils de boulonnage existants. Le caractère compact du dispositif expéditeur de cartouches selon l'invention le rend facilement transportable et permet ainsi de le réaliser, si cela est souhaité, comme un dispositif autonome.

L'on ne s'éloignerait pas du cadre de l'invention, telle que définie dans les revendications annexées:
- en ayant recours à tous moyens équivalents de ceux décrits, en particulier en utilisant sur le dispositif des moteurs et vérins de tout type : électrique, pneumatique ou hydraulique ;
- en réalisant ce dispositif avec un bac récepteur unique, et avec un distributeur rotatif également unique, auquel cas un seul type de cartouches peut être stocké et expédié à un moment donné ;
- en concevant le ou les distributeurs rotatifs avec des logements périphériques plus nombreux et régulièrement espacés sur la circonférence de chaque distributeur, auquel cas une rotation d'une fraction de tour seulement (et non pas d'un tour complet) est effectuée pour la distribution de chaque cartouche ;
- en destinant ce dispositif au stockage et à l'expédition de cartouches de tout type, non seulement des cartouches de résine mais encore des cartouches de ciment ou de toute autre matière de scellement appropriée.

## Revendications

1. Dispositif expéditeur de cartouches de résine, ou de cartouches de ciment ou autre matière de scellement, utilisé dans le domaine des mines et des carrières, ou dans le domaine des travaux publics, le dispositif étant apte à stocker un certain nombre de cartouches prévues pour être introduites dans des trous forés, **caractérisé en ce qu'**il comprend au moins un bac récepteur (5,6) de cartouches (8), apte à contenir des cartouches (8) disposées chacune horizontalement, les unes au-dessus des autres, chaque bac récepteur (5, 6) ayant une largeur sensiblement supérieure au diamètre d'une cartouche (8) et, de préférence, égale à un multiple de ce diamètre, de sorte que les cartouches (8) qu'il contient sont aussi décalées ou étalées dans le sens de sa largeur, le ou les bacs récepteurs (5,6) surmontant une zone de chargement (28) des cartouches (8) qui communique avec une zone d'expédition (29) des cartouches (8), et entre le ou chaque bac récepteur (5,6) et la zone de chargement (29) des cartouches (8) étant prévus des moyens de distribution (15) des cartouches (8), moyens qui sont activables de façon contrôlée.

2. Dispositif expéditeur de cartouches selon la revendication 1, **caractérisé en ce qu'**il comprend deux bacs récepteurs (5,6) de cartouches juxtaposés, en particulier un premier bac récepteur (5) pour le stockage de cartouches dites "lentes", et un second bac récepteur (6) pour le stockage de cartouches dites "rapides", des moyens de distribution (15) des cartouches (8) étant prévus à la base de chacun des deux bacs récepteurs (5,6), au-dessus d'une goulotte collectrice (22) commune de profil en "V" faisant elle-même partie de la zone de chargement (28) des cartouches (8).

3. Dispositif expéditeur de cartouches selon la revendication 1 ou 2, **caractérisé en ce que** le ou chaque bac récepteur (5,6) de cartouches (8) possède au moins une cloison transversale mobile (11), réglable en position dans la direction longitudinale de ce bac récepteur (5,6) de manière à adapter celui-ci à la longueur des cartouches (8).

4. Dispositif expéditeur de cartouches selon l'une des revendications 1 à 3, **caractérisé en ce que** le ou chaque bac récepteur (5,6) de cartouches (8) comporte, en particulier dans sa zone inférieure située juste au-dessus des moyens de distribution (15) des cartouches (8), un détecteur (38) de présence ou de niveau des cartouches (8) dans ce bac récepteur (5,6).

5. Dispositif expéditeur de cartouches selon l'une des revendications 1 à 4, **caractérisé en ce que** le ou chaque bac récepteur (5,6) de cartouches (8) comporte, en particulier dans sa zone inférieure située juste au-dessus des moyens de distribution (15) des cartouches (8), des moyens motorisés d'agitation (22 à 26) de ces cartouches (8).

6. Dispositif expéditeur de cartouches selon la revendication 5, **caractérisé en ce que** les moyens motorisés d'agitation des cartouches (8) sont constitués par au moins un volet oscillant (23) animé par une came rotative (25) accouplée, directement ou indirectement, à un moteur (20) d'entraînement en rotation.

7. Dispositif expéditeur de cartouches selon l'une des revendications 1 à 6, **caractérisé en ce que** les moyens de distribution (15) des cartouches sont constitués, pour le ou chaque bac récepteur (5, 6) de cartouches (8), par un distributeur rotatif en forme générale de cylindre allongé (17) d'axe sensiblement horizontal (16), pourvu à sa périphérie d'au moins un logement longitudinal (18) apte à recevoir une cartouche (8) et à la transférer du bac récepteur (5, 6) vers la zone de chargement (28), ledit cylindre (17) étant accouplé, directement ou indirectement, à un moteur (20) d'entraînement en rotation.

8. Dispositif expéditeur de cartouches selon les revendications 6 et 7, **caractérisé en ce que**, pour ie ou chaque bac récepteur (5, 6) de cartouches (8), la came rotative (25) animant le volet oscillant (23) d'une part, et le cylindre (17) du distributeur rotatif (15) d'autre part, sont accouplés à un moteur commun (20) d'entraînement en rotation, notamment par l'intermédiaire d'une transmission à chaîne ou à courroie (26).

9. Dispositif expéditeur de cartouches selon la revendication 7 ou 8, **caractérisé en ce qu'**au cylindre (17) du ou de chaque distributeur rotatif (15) est associé un capteur (39) pour le comptage du nombre des tours effectués par ce cylindre (17) ou par son axe (16).

10. Dispositif expéditeur de cartouches selon l'une des revendications 1 à 9, **caractérisé en ce que** la zone d'expédition (29) se situe dans le prolongement direct de la zone de chargement (28), et **en ce qu'**il est prévu un vérin de poussée (30) pour le déplacement en translation de chaque cartouche (8) depuis la zone de chargement (28) vers la zone d'expédition (29).

11. Dispositif expéditeur de cartouches selon la revendication 10, **caractérisé en ce qu'**il est prévu un clapet (36), mobile entre une position d'ouverture et une position de fermeture, et situé entre la zone de chargement (28) et la zone d'expédition (29), d'où chaque cartouche (8) est expédiée par soufflage d'air comprimé.

12. Dispositif expéditeur de cartouches selon la revendication 10 ou 11, **caractérisé en ce que** la zone d'expédition (29) comporte un détecteur (40) de présence de cartouche (8) dans cette zone (29).

13. Dispositif expéditeur de cartouches selon les revendications 11 et 12, **caractérisé en ce que** le détecteur (40) est associé au clapet (36) et détecte son ouverture lors du passage d'une cartouche (8).
